# EUROPEAN PATENT SPECIFICATION

(11) **EP 2 847 452 B1**
(45) Date of publication and mention of the grant of the patent: **30.11.2016**
(21) Application number: 13727664.8
(22) Date of filing: 07.05.2013
(51) Int. Cl.: F02K 9/42

(54) **IMPROVED REACTOR FOR AMMONIUM DINITRAMIDE-BASED LIQUID MONO-PROPELLANTS, AND THRUSTER INCLUDING THE REACTOR**
VERBESSERTER REAKTOR FÜR AUF AMMONIUMDINITRAMID BASIERENDE FLÜSSIGE MONOTREIBMITTEL UND TRIEBWERK MIT DEM REAKTOR
RÉACTEUR AMÉLIORÉ POUR MONOPROPERGOLS LIQUIDES À BASE DE DINITRAMIDE D'AMMONIUM, ET PROPULSEUR COMPRENANT CE RÉACTEUR

(30) Priority: 09.05.2012 SE 1200286; 09.05.2012 US 201261644794 P; 13.02.2013 US 201361764304 P
(43) Date of publication of application: 18.03.2015
(73) Proprietor: ECAPS Aktiebolag, 171 04 Solna (SE)
(72) Inventor: ANFLO, Kjell, S-136 73 Haninge (SE); THORMÄHLEN, Peter, S-172 62 Sundbyberg (SE)
(74) Representative: Brann AB
(86) International application number: PCT/SE2013/050507
(87) International publication number: WO 2013/169192

(56) References cited:
- WO-A1-02/095207
- KR-A- 20110 085 072
- US-A- 3 303 651
- US-A1- 2007 184 971

## Description

### FIELD OF THE INVENTION

The present invention relates to an improved reactor for ammonium dinitramide-based liquid monopropellants, such as High Performance Green Propulsion (HPGP) inonopropellants, and a thruster comprising such reactor, especially a thruster of about 5 N to a few kN:

### BACKGROUND ART

In launch and space vehicle applications, such as satellite launchers, satellites and other spacecrafts, liquid propellant thrusters, liquid propellant rocket engines and liquid propellant gas generators are often used. Such thrusters and rocket engines can for example be used for the purpose of orbit manoeuvring and attitude control, of satellites, and for example roll control and propellant settling in the main propulsion system of other space vehicles, in which case the rocket engines, or thrusters are often used in continues firing, off-modulation firing, pulse mode and single pulse firing, the duration of which typically can be fractions of a second to an hour. For such purposes small rocket engines, or thrusters are commonly used with a thrust of typically from 0.5 N to about 1.5 kN.

Such thrusters may be operated on ammonium dinitramide-(ADN)-based, liquid monopropellants, such as described in WO 2002/096832, and in WO 2012/166046. Some of the ADN-based, liquid monopropellants, are also being referred to as High Performance Green Propulsion (HPGP) monopropellants.

A reactor for the above ADN-based, liquid monopropellants has been described in WO 02/095207, as well as a thruster comprising the reactor. Such thrusters are also being referred to as HPGP thrusters.

Before firing a HPGP thruster, the-reactor is pre-heated to a sufficient temperature, typically 300°C to 400°C (*depending on bed load and specific monopropellant*). The reaction will start already with a heat bed temperature above 200°C, but in order to obtain a nominal start 350°C is preferred. During a long pulse or steady state firing, heat generated in the catalytic bed and in the combustion chamber will be sufficient to continuously heat monopropellant being injected into the thruster, so that the monopropellant is essentially in the gaseous state when entering the catalyst bed. If liquid phase monopropellant enters the catalyst bed, disintegration of the porous catalyst bodies may result due to the high vapour pressure formed within the porous bodies when exposed to heat from the combustion downstream. Also, a hard start will typically occur when liquid phase monopropellant fills a significant part of the heat bed due to ignition delay.

The power of the pre-heating is usually only enough to heat the heat bed to a sufficient temperature within a reasonable time, such as 10 to 30 minutes. With thrusters of increasing thrust, the pre-heating power required to reach a certain pre-heating temperature within a certain time increases. In the case of a small thruster of about 1 to 10 N, the pre-heating power is typically less than 10 W, and for a larger thruster of about 200 to 500 N it is in the order of 100 W. The pressurized propellant has usually a temperature of 10-50°C, when entering the pre-heated heat bed of the thruster.

It would obviously be desirable to reduce the required pre-heating power of the thruster, or the heating time to reach the required pre-heating temperature, or to reduce the energy consumption for maintaining the required pre-heating temperature, as power-supply often is very limited on e.g. launchers and spacecrafts.

Accordingly, it is an object of the invention to solve the above problem.

Other objects and advantages of the present invention will become evident from the following description, examples, and the attached claims.

The terms "rocket engine" and "thruster" will be used interchangeably herein to designate the portion of the inventive liquid propellant rocket engine, into which the propellant is injected, extending downstream to, and including, the nozzle.

While the problem could be solved according to the invention also for e.g. a 1 N thruster, it would for practical reasons, i.e. due to the small dimensions and associated added complexity, rarely be applied to such small thrusters, but typically to thrusters of about 5 N or more.

The thrust of the inventive rocket engine referred to herein is typically from 5 N to a few kN, such as 5 N to about 3 kN, or 5 N to 1 kN, and more preferably from 5 N to about 500 N.

### SUMMARY OF THE INVENTION

For a thruster as described in WO 02/095207, the above problem has been solved by means of the characterising technical feature of claim 1, according to which an inner reactor housing 45, separating the heat bed and catalyst bed from contact with the inner surface of the hollow body 5, is included in the reactor.

By means of the inner reactor housing 45, quicker pre-heating of the heat bed 25, and reduced energy consumption in keeping the bed heated at the required pre-heating temperature is accomplished by reducing heat losses.

Accordingly, in one aspect the invention relates to a reactor as set forth in claim 1.

In another aspect the present invention relates to a thruster including the inventive reactor.

The term "inner reactor housing" as used herein and designated by reference numeral 45 will also interchangeably be referred to as a "heat bed and catalyst bed housing".

The inventive reactor and thruster are also believed to be suitable for HAN-based liquid monopropellants, due to the similarity of the decompositions pathways of ammonium dinitramide (ADN), and hydroxyl ammonium nitrate (HAN), respectively.

The liquid monopropellants used with the invention are typically aqueous.

### BRIEF DESCRIPTION OF THE ATTACHED DRAWINGS

FIGURE 1 illustrates a reactor, wherein 5 is a hollow body, 10 a propellant feed pipe, 20 an injector, 25 a heat bed comprising pellets 26, 27 is a heat bed retainer, 30 a catalyst bed containing catalyst pellets 35, and 40 is a catalyst bed retainer, and 45 is an inner reactor housing, into which housing catalyst bed retainer 40 is fitted.

In connection with the inventive reactor, the hollow body 5 will also be referred to as reactor housing 5.

FIGURE 2 illustrates a rocket engine of the invention, i.e. an improved HPGP thruster, comprising the inventive reactor, wherein 50 denotes a combustion chamber.

In connection with the thruster, the hollow body 5 will also be referred to as thruster housing 5 or thruster envelope 5.

FIGURE 3 illustrates an embodiment of heat bed retainer 27 having flanges extending into the heat bed 25 and catalyst bed 30. The heat bed retainer is shown from the downstream side.

### DETAILED DESCRIPTION OF THE INVENTION

In practice, thrusters of the type disclosed in WO 02/095207 are typically heated by heating applied to the external surface of the hollow body 5, or to the injector 20.

By virtue of the invention, pre-heating of the heat bed can be effected by heating merely the inventive inner reactor housing 45. Thus, heating can be restricted to a smaller portion of the thruster/reactor. At the same time, the inner reactor housing will also serve to reduce the heat radiation from the heat bed by shielding radiation, and thus to reduce the heat loss from pre-heated parts of the thruster.

While the inner reactor housing 45 could be made integral with the catalyst bed retainer 40 (e.g. by for example brazing or welding) in order to maximize the reheating capability of the heat bed via the inner reactor housing and heat bed retainer, by improving the heat transfer from the catalyst bed retainer, this is generally not preferred in practice.

The present inventors have found that, during operation of the inventive reactor, especially larger thrusters, such as e.g. a 200 N thruster, catalyst bed retainer 40 will exhibit a substantially higher temperature than the inner reactor housing 45. Catalyst bed retainer 40 should therefore be fitted into inner reactor housing 45 with a loose fit, so as to allow for a greater extent of expansion, especially in the radial direction, of the catalyst bed retainer in relation to the expansion of the surrounding portion of the inner reactor housing 45. This is especially important for larger engines of about 200 N or more.

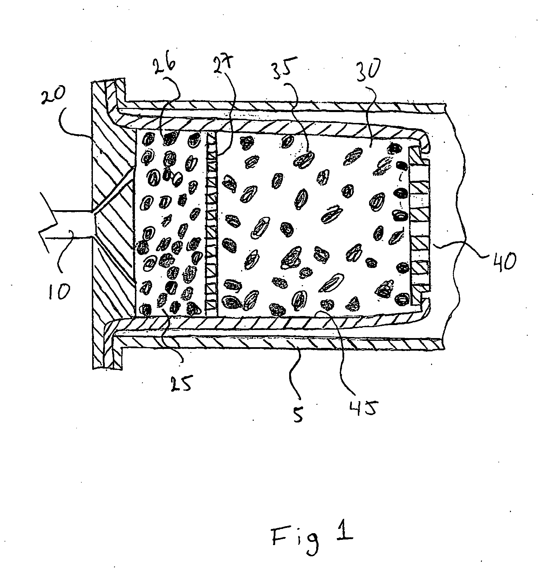

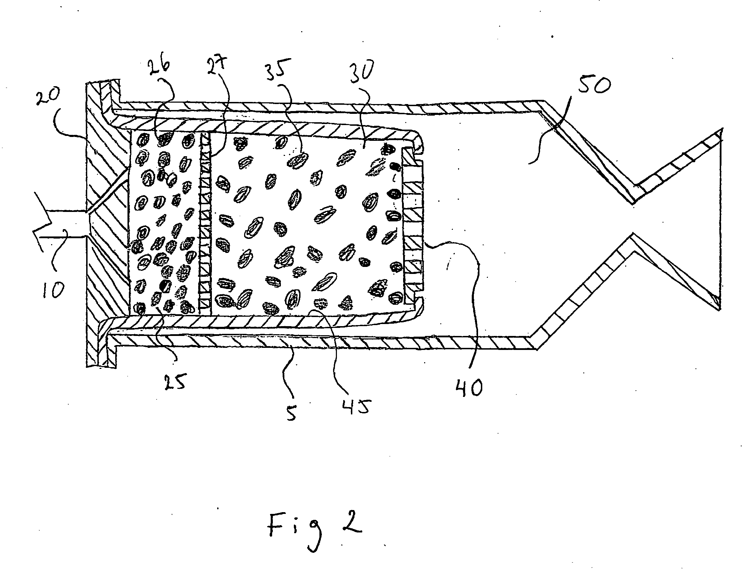

The inner reactor housing 45, and catalyst bed retainer 40 are consequently preferably separate parts, especially in larger engines. The catalyst bed retainer may for example rest on an inner circumferential flange (as shown in Figures 1 and 2) in the bottom of the inner reactor housing 45. The separate catalyst bed retainer may be made detachable from the inner reactor housing and replaceable.

The inner reactor housing 45 will serve to lead heat, generated downstream by thruster firing, upstream in the engine, back to the heat bed, and preventing heat from being led radially from the heat bed and catalyst bed to the hollow body 5.

The reactor of the invention preferably forms part of a rocket engine or thruster, such as shown in Fig 2.

In its most general embodiment, and with reference to Figure 1, the reactor of the invention comprises a hollow body 5 provided with, from the upstream end;
an injector 20;
a heat bed 25 comprising heat bed material 26;
a retainer 27 separating the heat bed from the catalyst bed;
a catalyst bed 30 of porous catalyst pellets 35 which are heat and sintering resistant to a temperature of at least 1000°C;
a retainer 40 for retaining the catalyst bodies in the catalyst bed; and
an inner reactor housing 45, separating the heat bed and catalyst bed from contact with the inner surface of the hollow body 5, wherein the inner reactor housing is thermally conductive and the heat bed and catalyst bed are in thermal contact with the inner reactor housing 45.

The overall void volume in the reactor is essentially formed of any interstitial spaces within the heat bed material contained in the heat bed, any interstitial spaces within the catalyst bed material contained in the catalyst bed, and of the porosity of the material in the catalyst bed.

In the case of a rocket engine, the reactor forms part of the engine as shown in Figure 2. For simplicity, any conventionally used parts which are attached to a rocket engine, such as the upstream parts; e.g. propellant feed system, propellant valve, thermal standoff, etc., as well as a heater for heating the heat bed (as conventionally used for heating the catalyst bed in the case of a hydrazine thruster) and thermal standoff for the heater, have been excluded from Figure 2. The skilled person will immediately recognise which further parts are required for the rocket engine, having read this disclosure. Accordingly, the hollow body confining the reactor is the hollow body of the engine, into which body the propellant is injected and combusted. Thus, there is a combustion chamber downstream of the reactor, for combustion the combustible components generated by the reactor.

The present inventors have found that, when operating a thruster as described in WO 02/095207 in certain pulse modes, hard starts are encountered. A hard start implies an overpressure condition during the ignition of the propellant in the thruster. In the worst cases, this takes the form of an explosion. A single hard start is obviously detrimental to the engine, and in worst case even fatal. The problem of hard starts has been observed for thrusters of 5N, 22 N and 200 N when operating the thruster on a liquid, ADN-based monopropellant.

The present inventors have established that the hard starts observed during pulsed mode firing are due to undue cooling of the heat bed. Hard starts have been observed in the medium to high duty region in combination with relatively short pulses, such e.g. a duty factor of at least about 5%, and a duration of the pulse of from about 100 ms to a few seconds. Duty factor, given as a percentage, is defined herein as 100 T_{ON}/(T_{ON}+T_{OFF}).

During pulsed mode firing, depending on the specific duty, and the duration of the pulses, the heat generated in the catalyst bed and in the combustion chamber may not be transferred fast enough to reheat the heat bed, resulting in the heat bed being cooled down to a temperature well below the required pre-heating temperature. For example, for a 22 N thruster hard starts tend to occur at a duty of at least about 10% and a duration of the pulse of from about 100 ms to a few seconds.

Pulsed mode firing is also typically associated with a higher bed load, i.e. a larger mass of propellant flowing through a given cross section of the catalytic bed per unit of time, than e.g. during steady state firing.

The present inventors have found the problem of hard starts during pulsed mode firings to be even more pronounced with the newly developed monopropellants described in WO 2012/166046, such as e.g. the monopropellant designated 1127-3 (corresponding to the monopropellant of Example 3 in WO 2012/166046), having a lower energy content and higher cooling effect than e.g. LMP-103S.

The inner reactor housing 45 will improve the reheating of the heat bed by leading heat from the catalyst bed and catalyst retainer upstream in the engine, back to the heat bed, and preventing heat from being led radially from the heat bed and catalyst bed to the hollow body 5.

Thereby, the recovery time of the reactor after a pulse will be shortened to some extent, and thus the risk of hard starts during pulsed mode firing will be reduced.

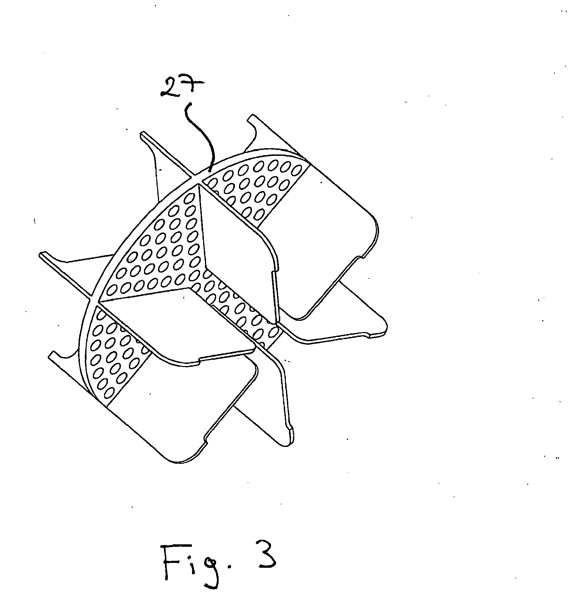

In a preferred embodiment, the inner reactor housing 45 accommodates an internal structural element in the heat bed and/or the catalytic bed, such as a honeycomb structure, or baffles, further improving the heat leading capacity upstream in the engine, and thereby the reheating of the heat bed. The internal structural element may thus extend upstream into the heat bed and/or downstream into the catalytic bed. Such structures also allow for partitioning, or compartmentalizing the catalyst material contained in the catalyst bed and/or the heat bed material contained in the heat bed. Said structures could be made so as to be detachable and replaceable. Such embodiment is shown in Figure 3, wherein retainer 27 is provided with flanges extending into the heat bed and into the catalyst bed. Such structure will serve to improve the reheating of the heat bed. The flanges extending downstream into the catalyst bed may rest against the catalyst bed retainer 40.

In fact, calculations have demonstrated that for a HPGP thruster of about 200 N, a combination of an inner reactor housing 45 and a structural element extending downstream into the catalyst bed and upstream into the heat bed (such as shown in Fig. 3) will result in an improvement of the recovery time of the reactor by a factor of about 10, as compared to a conventional 200 N HPGP thruster of the general concept disclosed in WO 02/095207. Similar improvements are believed to be achieved also for thrusters in the range of 5 N to a few kN.

Larger engines will incur higher bed-loads, i.e. more propellant will have to pass a given cross-sectional area of the bed per unit time, and therefore also a higher degree of heat bed cooling will result. In parallel, the present inventors have found that by providing catalytic activity to the heat bed, the decomposition/combustion of the propellant can be initiated further upstream in the engine, which thereby will provide additional heat (in addition to the effects of the inner housing, and of the internal structural element, when used) to the heat bed to further counteract the undue heat bed cooling at high bed-loads.

Accordingly, a heat bed 30 exhibiting catalytic activity has been found to be beneficial, especially for lager engines at pulse mode operation, where even higher bed-loads are encountered.

Accordingly, in one embodiment the inventive reactor and thruster include a heat bed exhibiting catalytic activity. Such heat bed exhibiting catalytic activity has been disclosed in US 61/644,772, and in applicant's co-pending US provisional application filed on even date herewith. The catalytic heat bed disclosed therein comprises a heat bed material 26 exhibiting catalytic activity, which material is formed from non-porous or low-porous high-temperature-resistant ceramic and/or metallic materials, coated with a catalytically active noble metal, such as Ir, Pd, Pt, Rh, Ru, or a combination thereof. The heat bed material 26 is preferably in the form of pellets, but also honeycomb structures may be suitable. When the heat bed material 26 is provided in the form of pellets, a suitable size of the pellets 26 is about one tenth, or less, preferably about one tenth, of the inner diameter of the inner reactor housing 45.

### Components of the reactor, and of the thruster

### Injector 20

The injector is not critical to the invention, as long as it is able to perform its intended function, i.e. to distribute the propellant evenly over the heat bed. Suitable injectors are known in the art and will not be described further herein.

### The heat bed 25

The heat bed is provided in order to vaporise the propellant before entering into the catalyst bed. The heat bed must exhibit sufficient heat capacity in order to vaporise a sufficient portion of the propellant being fed into the bed during start and before heat is being transferred upstream to the bed. The heat bed must also exhibit a sufficient thermal conductivity in order to be able to dissipate heat throughout the bed, which heat partly will be transferred from downstream to the bed via the reactor walls of the reactor body 5. The heat it then transferred to the propellant flowing through the bed. Furthermore, the material of the bed must be able to withstand any detrimental impact from components generated on decomposition of ADN in the bed, such as, e.g., nitric acid. Accordingly, the material of the heat bed should e.g. be acid resistant.

### Retainer 27 for the heat bed 25

The retainer serves to keep the heat bed (catalytic or non-catalytic) in place, and to keep it separate from the catalyst bed downstream. An example of a suitable retainer is a perforated plate of Ir or Ir supported by Re, as Ir is inert to the relevant combustion species.

In a preferred embodiment the retainer is provided with flanges, or similar structure, extending upstream into the heat bed. The flanges will serve to improve the heat leading capacity back, upstream in the engine during operation thereof, and will thus improve the reheating of the heat bed, by effectively transferring heat back upstream from the heat bed retainer to the heat bed material.

In an alternative preferred embodiment the heat bed retainer is provided with flanges, or similar structure, extending downstream into the catalyst bed. The flanges will serve to improve the heat leading capacity back, upstream in the engine during operation thereof, and will thus improve the reheating of the heat bed, by effectively transferring heat back upstream from the catalyst bed to the heat bed retainer.

When a heat bed retainer 27 having flanges extending downstream into the catalyst bed is being used, said flanges may rest against catalyst bed retainer 40.

In a more preferred embodiment, for even more efficient reheating of the heat bed, the heat bed retainer exhibits flanges or a similar structure, extending upstream into the heat bed, and downstream into the catalyst bed. Such embodiment of the heat bed retainer 27 is shown in Figure 3 and will further improve the heat transfer from the catalyst bed to the heat bed.

### Catalyst bed 30

A suitable catalyst bed has been described in WO 02/095207, and will not be described in any detail herein. Suitable catalyst material and pellets are known in the art and have been described in WO 02/094717, and WO 02/094429, respectively. A suitable size of the pellets 35 of the catalyst bed 30 is about one tenth, or less, preferably about one tenth, of the inner diameter of the inner reactor housing 45.

### Inner reactor housing 45

The "inner reactor housing" as designated by reference numeral 45 is also referred to as "heat bed and catalyst bed housing". The inner reactor housing 45 separates the heat bed and catalyst bed from contact with the inner surface of the hollow body 5. The thermal contact of the inner reactor housing with the reactor housing 5 should be kept to a minimum. Accordingly, any thermal contact of the inner reactor housing 45 with reactor housing 5 should be restricted to the area of attachment of the inner reactor housing 45 to reactor housing 5, which area should be located upstream in the reactor, such as along the upstream flange as shown in Figure 1 and 2, in the vicinity of the injector. Also, the peripheral clearance between inner reactor housing 45 and reactor housing 5 should allow for some small extent of expansion of the inner reactor housing 45. The heat bed 25, heat bed retainer 27, and catalyst bed 30 will be accommodated within the inner reactor housing 45.

As previously pointed out, the inner reactor housing will serve to improve the pre-heating of the heat bed, and will also shorten the recovery time from one pulse to the following during pulse mode firing.

### Retainer 40 for the catalyst bed 30

The catalyst bed is kept in place by a retainer. The inner reactor housing 45 is preferably separate from catalyst bed retainer 40, and will form the bottom of the inner reactor housing. An example of a suitable retainer is a perforated plate of Ir or Ir supported by Re, as Ir is inert to the relevant combustion species. As shown in Figs 1 and 2, the plate may for example rest on a peripheral flange in the bottom of inner reactor housing 45.

### The combustion chamber 50 (in the case of a thruster)

The walls of the reactor, including the combustion chamber, must be able to withstand the high temperatures generated during combustion of the propellant. They must also be resistant to any exhaust gases or intermediary decomposition products generated in the reactor. A suitable material for long-lifetime applications is rhenium. In order to withstand the nitric gases generated in the final steps of the decomposition the combustion chamber portion of the walls are suitably lined with iridium.

Suitable materials for the different parts of the engine downstream of the injector, such as reactor housing, thruster envelope, and retainers, are e.g. Ir and Re. In applications designed for a shorter life time, or lower temperatures, other materials, such as the molybdenum alloys TZM and MHC, alloys of platinum, and other alloys of molybdenum may also be suitable.

### Function of the reactor and process of decomposition

Except for the inventive inner reactor housing, the internal structural element extending into the heat bed and/or catalyst bed, and the catalytic heat bed the general function of the reactor and its components, as well as the process of decomposition are already known from WO 02/095207, and will not be described in any detail herein.

The heat bed of WO 02/095207 will vaporise the propellant, and, at the same time, initiate the thermal decomposition of ADN, which, according to the reaction scheme set forth in WO 02/095207, is necessary in order to perform the complete catalytic combustion of the propellant in the catalyst bed downstream.

The inner reactor housing separates the heat bed and catalyst bed from contact with the inner surface of the hollow body, and will shield radiation from the heat bed during pre-heating, and will also reduce the recovery time by enhancing reheating of the heat bed.

The internal structural element, when used, will transfer heat upstream to the heat bed during operation of the thruster and thereby markedly reduce the recovery time.

The inventive catalytic heat bed, when used, additionally initiates the final catalytic decomposition/combustion which generates heat further upstream in the inventive engine, as compared to the prior art engine wherein the heat is generated in the catalyst bed.

## Claims

1. A reactor for decomposition of a liquid ammonium dinitramide-based monopropellant into hot, combustible gases, comprising a hollow body (5) of a thermally conductive, heat resistant metallic material provided with, from the upstream end;
an injector (20);
a heat bed (25);
a heat bed retainer (27);
a catalyst bed (30) of porous catalyst pellets (35) which are heat resistant up to a temperature of at least 1000°C, and;
a catalyst bed retainer (40),
**characterized in** further comprising an inner reactor housing (45) fitted into the hollow body (5), separating the heat bed and catalyst bed from contact with the inner surface of the hollow body (5), wherein the inner reactor housing (45) is thermally conductive and the heat bed and catalyst bed are in thermal contact with the inner reactor housing (45).

2. The reactor of claim 1, wherein the heat bed retainer (27) exhibits flanges extending upstream into the heat bed and/or downstream into the catalyst bed.

3. The reactor of claim 1 or 2, wherein the heat bed exhibits catalytic activity.

4. The reactor of any one of claims 1-3, wherein the heat bed material (26) is in the form of pellets.

5. The reactor of claim 4, wherein the pellets (26) are coated with a catalytically active noble metal, preferably selected from the group of Ir, Pd, Pt, Rh, Ru, or a combination thereof.

6. The reactor of claim 4 or 5, wherein the size of the pellets (35) and pellets (26) is about one tenth, or less, of the inner diameter of the inner reactor housing (45).

7. A rocket engine for an ammonium dinitramide-based liquid monopropellant, comprising:
the reactor of any one of claims 1-6; and, immediately downstream of the reactor
a combustion chamber (50).

8. The rocket engine of claim 7, dimensioned so as to have a thrust within the range of from 5 N to a few kN, such as from 5 N to about 3 kN, preferably from 5 N to 1 kN, and more preferably from 5 N to 500 N.

9. Use of the reactor of any one of claims 1-6, or the rocket engine of claim 7 or 8, for decomposition of a liquid, HAN-based monopropellant.

## Patentansprüche

1. Ein Reaktor zur Zersetzung eines flüssigen Monotreibstoffs auf der Basis von Ammoniumdinitramid in heiße, brennbare Gase, umfassend einen Hohlkörper (5) aus einem wärmeleitfähigen, wärmebeständigen metallischen Material, versehen mit, vom stromaufwärts gelegenen Ende aus:
einem Injektor (20);
einem Heizbett (25);
einer Heizbetthalterung (27);
einem Katalysatorbett (30) aus porösen Katalysatorpellets (35), welche bis zu einer Temperatur von mindestens 1000°C wärmebeständig sind, und
einer Katalysatorbetthalterung (40),
**dadurch gekennzeichnet, dass** er ferner ein Reaktorinnengehäuse (45) umfasst, eingepasst in den Hohlkörper (5), welches das Heizbett und das Katalysatorbett vom Kontakt mit der Innenoberfläche des Hohlkörpers (5) trennt, wobei das Reaktorinnengehäuse (45) wärmeleitfähig ist und das Heizbett und das Katalysatorbett in thermischem Kontakt mit dem Reaktorinnengehäuse (45) stehen.

2. Der Reaktor gemäß Anspruch 1, wobei die Heizbetthalterung (27) Flansche aufweist, welche sich stromaufwärts in das Heizbett und/oder stromabwärts in das Katalysatorbett erstrecken.

3. Der Reaktor gemäß Anspruch 1 oder 2, wobei das Heizbett katalytische Aktivität aufweist.

4. Der Reaktor gemäß einem der Ansprüche 1-3, wobei das Heizbettmaterial (26) in Form von Pellets vorliegt.

5. Der Reaktor gemäß Anspruch 4, wobei die Pellets (26) mit einem katalytisch aktiven Edelmetall beschichtet sind, vorzugsweise ausgewählt aus der Gruppe aus Ir, Pd, Pt, Rh, Ru oder einer Kombination davon.

6. Der Reaktor gemäß Anspruch 4 oder 5, wobei die Größe der Pellets (35) und Pellets (26) etwa ein Zehntel oder weniger des Innendurchmessers des Reaktorinnengehäuses (45) beträgt.

7. Ein Raketentriebwerk für einen flüssigen Monotreibstoff auf der Basis von Ammoniumdinitramid, umfassend:
den Reaktor gemäß einem der Ansprüche 1-6; und, unmittelbar stromabwärts von dem Reaktor
eine Brennkammer (50).

8. Das Raketentriebwerk gemäß Anspruch 7, derart dimensioniert, dass es einen Schub innerhalb des Bereiches von 5 N bis einige kN aufweist, wie z. B. von 5 N bis etwa 3 kN, vorzugsweise von 5 N bis 1 kN und stärker bevorzugt von 5 N bis 500 N.

9. Verwendung des Reaktors gemäß einem der Ansprüche 1-6 oder des Raketentriebwerks gemäß Anspruch 7 oder 8 zur Zersetzung eines flüssigen Monotreibstoffs auf der Basis von HAN.

## Revendications

1. Réacteur pour la décomposition d'un monopropergol à base de dinitramide d'ammonium liquide en gaz combustibles chauds, comprenant un corps creux (5) constitué d'un matériau métallique thermoconducteur, thermorésistant, équipé, en partant de l'extrémité en amont, de :
un injecteur (20) ;
un lit chauffant (25) ;
un dispositif de retenue du lit chauffant (27) ;
un lit catalytique (30) de granulés de catalyseur poreux (35) qui sont thermorésistants jusqu'à une température d'au moins 1 000 °C, et ;
un dispositif de retenue de lit catalytique (40),
**caractérisé en ce qu'**il comprend en outre une gaine interne de réacteur (45) installée dans le corps creux (5), empêchant le contact du lit chauffant et du lit catalytique avec la surface interne du corps creux (5), dans lequel la gaine interne de réacteur (45) est thermoconductrice et le lit chauffant et le lit catalytique sont en contact thermique avec la gaine interne de réacteur (45).

2. Réacteur selon la revendication 1, dans lequel le dispositif de retenue du lit chauffant (27) présente des brides s'étendant en amont dans le lit chauffant et/ou en aval dans le lit catalytique.

3. Réacteur selon la revendication 1 ou 2, dans lequel le lit chauffant présente une activité catalytique.

4. Réacteur selon l'une quelconque des revendications 1 à 3, dans lequel le matériau du lit chauffant (26) est sous la forme de granulés.

5. Réacteur selon la revendication 4, dans lequel les granulés (26) sont enrobés d'un métal noble catalytiquement actif, de préférence choisi dans le groupe constitué de l'Ir, du Pd, du Pt, du Rh, du Ru ou d'une combinaison de ceux-ci.

6. Réacteur selon la revendication 4 ou 5, dans lequel la taille des granulés (35) et des granulés (26) est environ d'un dixième, ou moins, du diamètre intérieur de la gaine interne du réacteur (45).

7. Moteur de fusée pour un monopropergol liquide à base de dinitramide d'ammonium, comprenant :
le réacteur selon l'une quelconque des revendications 1 à 6 ; et immédiatement en aval du réacteur
une chambre de combustion (50).

8. Moteur de fusée selon la revendication 7, dimensionné de sorte à avoir une poussée dans la plage allant de 5 N à quelque kN, par exemple de 5 N à environ 3 kN, de préférence de 5 N à 1 kN, et plus préférablement de 5 N à 500 N.

9. Utilisation du réacteur selon l'une quelconque des revendications 1 à 6, ou du moteur de fusée selon la revendication 7 ou 8, pour la décomposition d'un monopropergol liquide à base de HAN.
